# EUROPÄISCHE PATENTANMELDUNG

(11) **EP 1 509 022 A1**
(43) Veröffentlichungstag der Anmeldung: **23.02.2005**
(21) Anmeldenummer: 04102331.8
(22) Anmeldetag: 27.05.2004
(51) Int. Cl.: H04L 29/06

(54) **Nutzungsbeschränkung einer Klasse von Datenobjekten**

(30) Priorität: 19.08.2003 DE 10338056; 02.10.2003 DE 10346015
(71) Anmelder: SIEMENS AKTIENGESELLSCHAFT, 80333 München (DE)
(72) Erfinder: Bienas, Maik, 30519 Hannover (DE); Schwagmann, Norbert, 38102 Braunschweig (DE); Trauberg, Markus, 38159 Velchede (DE)

(57) **Zusammenfassung**

Eine besonders effiziente und flexible Möglichkeit zur Nutzungsbeschränkung einer Klasse von Datenobjekten wird beschrieben durch das Verfahren und die Vorrichtung zur Nutzungsbeschränkung einer Klasse von Datenobjekten (DO) für ein Endgerät in einem Kommunikationsnetz. Erfindungsgemäß wird bei einer Nutzungsanfrage eines Endgerätes für die Benutzung eines ein Rechteobjekt (RO) enthaltendes Datenobjekt das Rechteobjekt von einer Netzeinheit überprüft und im Falle eines positiven Überprüfungsergebnisses eine Klasse von Datenobjekten (DO) von der Netzeinheit (NE) zur Nutzung für das Endgerät freigegeben.

## Beschreibung

Die Erfindung betrifft ein Verfahren und eine Vorrichtung zur Nutzungsbeschränkung einer Klasse von Datenobjekten für ein Endgerät in einem Kommunikationsnetz.

Von der Offenen Mobilfunk Allianz (Open Mobile Alliance) (OMA) wird ein Verfahren spezifiziert, mit dem digitale Inhalte vor Zugriffen durch unautorisierte Nutzer geschützt werden können und autorisierten Nutzern genau definierte Rechte zur Nutzung der Inhalte eingeräumt werden können. Dieses Verfahren wird als Digitales Rechte Management (Digital Rights Management) (DRM) bezeichnet. Bisher wurden von der Open Mobile Alliance drei verschiedene Methoden zum Rechte-Management definiert und verabschiedet. Die drei Methoden sind im Einzelnen:

Weiterleitungssperre "Forward-Lock": Das oder die Medienelement(e) werden in einem neuen Datentyp eingepackt, der neben den Medienelementen noch einige wenige Signalisierungsinformationen enthält. Mit dem neuen Datentyp ("application/oma.-drm.message") ist die Beschränkung verknüpft, dass die darin enthaltenen Objekte nicht weitergeleitet, nicht im Dateisystem frei zugänglich abgespeichert und nicht verändert werden dürfen. Medienelemente sind Datenobjekte, wie Bild-, Video-, Audio-, Spiele-, Anwendungs- und/oder ähnliche Dateien. Es ist somit eine spezielle Behandlung der Objekte dieses Typs durch ein Endgerät erforderlich.

Gemeinsamer Versand "Combined-Delivery": Die Medienelemente sind in denselben Datentyp eingepackt wie bei der Methode "Forward-Lock". Zusätzlich ist darin noch eine Rechtebeschreibung enthalten, mit der weitere Nutzungseinschränkungen bezüglich der Nutzung der Datenobjekte festgelegt werden können. Beispiele hierfür sind die Beschränkung der Nutzungszeit, der Nutzungshäufigkeit oder der Nutzungsart (zum Beispiel "nicht drucken").

Getrennte Lieferung "Separate-Delivery": Die Medienobjekte werden in einem weiteren neuen Datentyp verschlüsselt ("application/oma.drm.content", im Folgenden auch als DRM-Container (DRMC) bezeichnet) eingepackt, der wiederum einige Signalisierungsinformationen enthält. Durch die Verschlüsselung kann der Inhalt vor unautorisierter Benutzung geschützt werden, auch wenn er von einer Anwendung ohne spezifische DRM-Funktionalität gehandhabt und in dem frei zugänglichen Speicherbereich eines Endgerätes abgelegt wird. Zusätzlich wird über einen sicheren Kanal ein Rechteobjekt zum Empfänger übertragen. Es hat in der textuellen Codierung den Datentyp "application/vnd.oma.drm.rights+xml" und in der binären Codierung den Typ "application/vnd.oma.drm.rights+wbxml".

In den beiden Methoden "Combined-Delivery" und "Separate-Delivery" spielt das Rechteobjekt (RO) eine zentrale Rolle. Dieses Objekt enthält die Informationen über die mit einem Inhaltsobjekt verknüpften Rechte (die Nutzungsbeschränkungen) und bei Verwendung der Methode "Separate Delivery" auch den Schlüssel zum Entschlüsseln des verschlüsselten Inhaltsobjekts im DRMC. Die Definition des Rechteobjektes ist durch die Spezifikation OMA-Download-DRMREL-v1_0-20020913-C in Verbindung mit einer XML DTD (extensible Markup Language Document Type Definition) gegeben, die unter http://www.openmobilealliance.org/documents.asp abrufbar ist. In der aktuellen Version der Definition für ein Rechteobjekt sind einige Rechte und Einschränkungen enthalten. Zu den Rechten zählen:
"Abspielen" (für audio-visuelle Inhalte),
"Anzeigen" (für visuelle Inhalte (Bilder, Video)),
"Ausführen" (für ausführbare Programme) und
"Drucken" (für das Erstellen einer materiellen Kopie eines Inhalts wie zum Beispiel Bilder, Texte oder Graphiken).

Die bisher definierten Nutzungseinschränkungen beziehen sich auf die Anzahl der erlaubten Nutzungen oder eine erlaubte Nutzungsdauer. Diese kann entweder durch einen Start- und einen Endzeitpunkt (absolut oder relativ zum Startzeitpunkt) festgelegt werden oder auch eine maximale kumulierte Nutzungsdauer beschreiben.

Bei der Methode "Separate Delivery" ist das Inhaltsobjekt (das zu schützende Datenobjekt) im DRM- Container enthalten. Dieser hat zwei Bestandteile: Einerseits das verschlüsselte Inhaltsobjekt und andererseits einen Kopfteil, der Steuerinformationen und eine Beschreibung des Inhaltsobjekts enthält. Zu den Steuerinformationen gehört eine Referenz auf den Rechteanbieter (Rights-Issuer) RA, die vom Endgerät genutzt werden kann, um weitere Rechte für das Inhaltsobjekt zu erhalten, und eine eindeutige Referenz, die sogenannte "Content-URI", die zur Referenzierung des Inhaltsobjekts aus dem Rechteobjekt heraus dient. Diese Referenz (in Form einer URI) wird im Rechteobjekt als Referenz verwendet, um die Verbindung zwischen Rechteobjekt und Inhaltsobjekt darzustellen.

Die Möglichkeit, den Umgang mit Datenobjekten einzuschränken, fördert das Bereitstellen von Datenobjekten, denn durch diese Möglichkeit hat der Anbieter der Datenobjekte die Mittel, die Nutzung seiner Datenobjekte zu kontrollieren und sie damit gewinnbringend einzusetzen. Des Weiteren profitiert der Nutzer von Datenobjekten von der größeren Auswahl an Datenobjekten.

Aufgabe der vorliegenden Erfindung ist es, effizientere Möglichkeiten für die Nutzungseinschränkung und Überprüfung der Nutzungseinschränkungen von Datenobjekten vorzuschlagen.

Die Aufgabe wird erfindungsgemäß jeweils durch die Gegenstände der unabhängigen Patentansprüche gelöst. Weiterbildungen der Erfindung sind in den Unteransprüchen gelöst. Bei einer Nutzungsanfrage eines Endgerätes für die Benutzung eines ein Rechteobjekt enthaltenden Datenobjekts überprüft eine Netzeinheit das Rechteobjekt. Im Falle eines positiven Überprüfungsergebnisses wird von der Netzeinheit eine Klasse von Datenobjekten für die Benutzung durch das Endgerät freigegeben. Eine Klasse von Datenobjekten besteht aus mehreren Datenobjekten mit mindestens einer Gemeinsamkeit, wie zum Beispiel dem Interpret bzw. dem Künstler, dem Albumtitel einer Musik-CD, dem Anbieter des Datenobjekts, der Kategorie des Datenobjekts, der Unterkategorie etc. Dabei sind Nutzungsbeschränkungen, wie zum Beispiel eine Nutzungsbeschränkung, bezogen auf ein geographisches Gebiet, Endgeräte bestimmter Hersteller und das Alter des Nutzers des Endgerätes, in einem Rechteobjekt enthalten. Ein Endgerät kann ein Mobilfunkendgerät, ein Computer, ein Handheld, ein Notebook oder Ähnliches sein. Ein Vorteil der erfindungsgemäßen Lösung ist die hohe Effizienz und Flexibilität der Rechtebeschränkung und -überprüfung. Ausserdem kann eine Freigabe für die Benutzung einer Klasse von Datenobjekten mit Hilfe von Nutzungseinschränkungen dahingehend eingeschränkt werden, dass nur einzelne Datenobjekte benutzt werden können. Dies kann zum Beispiel bei Spielen, die eines Altersnachweises bedürfen, von besonderem Interesse sein.

Die Erfindung wird anhand eines in einer Figur dargestellten Ausführungsbeispiels näher erläutert. Dabei zeigen
- Figur 1: die Nutzungseinschränkung eines Datenobjektes von einem Rechteobjekt aus mit der "Separate-Delivery" - Methode nach dem Stand der Technik,
- Figur 2: den Aufbau eines Rechteobjekts mit dem Element <Constraint> - Teil 1,
- Figur 3: den Aufbau eines Rechteobjekts mit dem Element <Constraint> - Teil 2,
- Figur 4: den Aufbau eines Rechteobjektes für eine Klasse von Datenobjekten, Variante 1,
- Figur 5: den Aufbau eines Rechteobjektes für eine Klasse von Datenobjekten, Variante 2,
- Figur 6: eine vereinfachte Darstellung einer Netzeinheit zur Überprüfung und Freigabe von Datenobjekten.

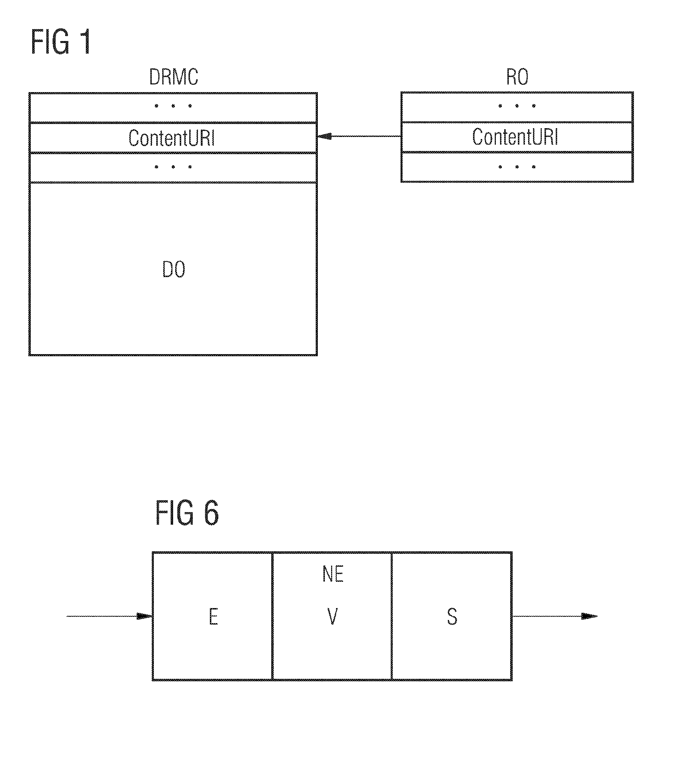

Figur 1 zeigt gemäß dem Stand der Technik die Nutzungseinschränkung eines Datenobjektes von einem Rechteobjekt RO aus in der "Separate-Delivery" - Methode. Bei der Methode "Separate Delivery" ist das Inhaltsobjekt (das zu schützende Datenobjekt) DO im DRM-Container DRMC enthalten. Dieser hat zwei Bestandteile: Einerseits das verschlüsselte Inhaltsobjekt DO und andererseits einen Kopfteil, der Steuerinformationen und eine Beschreibung des Inhaltsobjekts DO enthält. Zu den Steuerinformationen gehört eine Referenz zum Rechteanbieter (RA, "Rights-Issuer"), die vom Endgerät genutzt werden kann, um weitere Rechte für das Inhaltsobjekt DO zu erhalten, und eine eindeutige Referenz, die sogenannte "ContentURI" (Content Uniform resource locator = Content Internetadresse), die zur Referenzierung (Nutzungsbeschränkung) des Inhaltsobjekts DO aus dem Rechteobjekt RO heraus dient. Diese Referenz (in Form einer URI) wird im Rechteobjekt RO als Referenz verwendet, um die Verbindung zwischen Rechteobjekt RO und Inhaltsobjekt DO darzustellen. Nach dem bisherigen Stand der Technik enthält ein Rechteobjekt RO unter anderem sogenannte Genehmigungen (*Permissions*), die folgende Nutzungsarten erlauben können:
- *play* (Abspielen)
- *display* (Anzeigen)
- *execute* (Ausführen)
- *print* (Drucken)

Zu jeder dieser Genehmigungen (*Permissions*) können Nutzungsbeschränkungen, sogenannte *Constraints,* im Rechteobjekt RO enthalten sein:
- *count* (maximale Anzahl der Nutzungen)
- *datetime* (Start- und Endzeit einer Nutzung)
- *interval* (Dauer einer Nutzung)

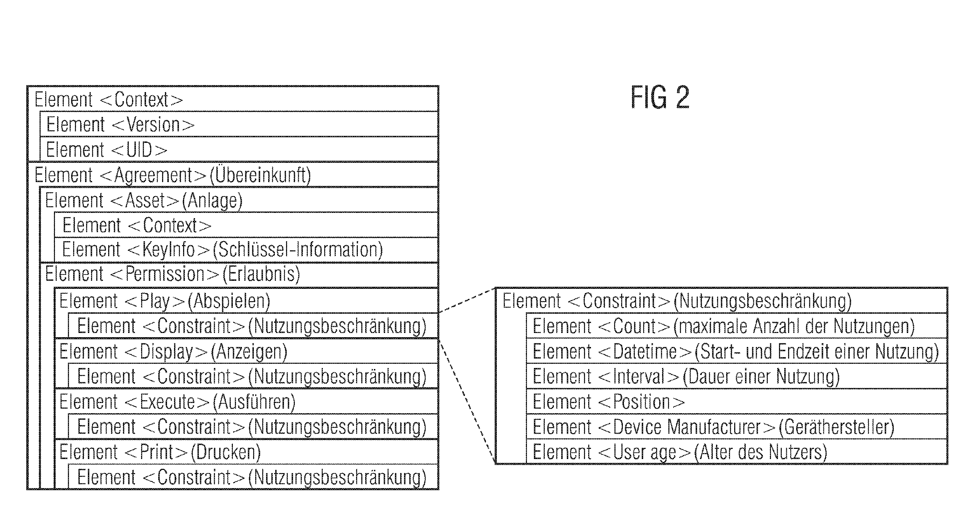

Figur 2 zeigt den Aufbau eines Rechteobjekts RO mit dem Element <Constraint> und den ersten Teil möglicher Nutzungsbeschränkungen. Die erfindungsgemäß neuen Nutzungseinschränkungen werden vorteilhaft als zusätzliche *Constraints* im Rechteobjekt RO eingeführt. Die folgenden *Constraints* werden neu eingeführt:
- Position (Position, bei der eine Nutzung erlaubt ist) Die Angabe kann zum Beispiel in Breiten- und Längengrad angegeben werden, so dass eindeutig eine Position oder ein Gebiet definiert wird. Es könnte jedoch auch die Angabe der Cell-ID einer Mobilfunk-Basisstation verwendet werden.
- Device Manufacturer (Name des Geräte-Herstellers). Mit Geräten dieses Herstellers ist die Nutzung erlaubt.
- User age (Alter des Nutzers) Damit die Nutzung erlaubt ist, kann es die Möglichkeit geben einen Altersbereich anzugeben, z.B. in den folgenden Formen: <6 Jahre, ≥18 Jahre, 4 - 6 Jahre)

Die Nutzungsbeschränkungen sind erfindungsgemäß bei Verwendung der Methode "Combined-Delivery" und der Methode "Separate-Delivery" in den Rechteobjekten RO enthalten. Jedes Endgerät, welches das geschützte Datenobjekt nutzen möchte, muss vor der Nutzung die Beschreibung der Nutzungseinschränkung im Rechteobjekt auswerten und bei der Nutzung berücksichtigen.

Der wesentliche Bestandteil der Erfindung, dass die erfindungsgemäßen Nutzungsbeschränkungen in Rechteobjekten RO beschrieben werden, ist bei allen folgenden Definitionen für Nutzungsbeschränkungen bzw. Einschränkung gemeinsam.
1. Beschränkung der Nutzung von Medienobjekten auf begrenzte geografische Gebiete: Dadurch kann die Nutzung in einer bestimmten Region erlaubt werden. Beim Verlassen dieser Region erlischt die Erlaubnis. Diese Einschränkung könnte beispielsweise in Zoos Anwendung finden. Der Besucher lädt Datenobjekte, die Informationen über die ausgestellten Tiere beinhalten, auf sein eigenes mobiles Kommunikationsgerät, zum Beispiel ein Mobilfunkendgerät oder ein tragbarer Computer - Handheld (PDA). Die Rechte, sich diese In formationen anzusehen, erhält der Besucher durch den Erwerb einer Eintrittskarte. Die Nutzung ist beschränkt auf die Zooanlage. Außerhalb dieser kann die Information nicht verwendet werden. Während des Besuchs im Zoo hat der Nutzer nun uneingeschränkt die Möglichkeit, die Informationen zu nutzen. Ein weiteres Beispiel ist der Schutz von geheimen Firmendaten durch positionsabhängige Nutzungsrechte. Ein Angestellter, der geheime Informationen auf seinem Laptop hat, kann diese Information nur nutzen, wenn er sich zum Beispiel am Arbeitsplatz befindet. Außerhalb des Firmengeländes ist eine Nutzung nicht möglich. Das hat den Vorteil, dass die geheimen Informationen auf einem gestohlenen Gerät nicht verwendet werden können, und dass auch der Angestellte keine Möglichkeit hat, die Informationen unerlaubt zu nutzen. Es entstehen dem Angestellten so keine Nachteile bei der Nutzung der Information, und der Arbeitgeber hat die Sicherheit, dass die geheime Information weiterhin geheim bleibt. Um das Einhalten dieser Einschränkung zu gewährleisten, muss sichergestellt werden, dass von dem Gerät, das das Datenobjekt nutzt, die Position während der Nutzung bestimmt werden kann. Dass kann zum Beispiel mit dem bei 3GPP ("Third Generation Partnership Project") standardisierten Verfahren *"Location Service"* getan werden oder mit einem GPS-Empfänger (Global Positioning System). In einigen Fällen reicht es aus, die Identifikation der nächsten Mobilfunk-Basisstation (die sogenannte Cell-ID) als Indiz für die Position zu nutzen, die in jedem empfangsbereiten Mobilfunkendgerät bekannt ist.
2. Beschränkung der Nutzung von Medienobjekten auf Geräte bestimmter Hersteller: Dadurch kann die Nutzung von Datenobjekten auf Endgeräten eines oder mehrerer bestimmter Hersteller erlaubt werden. Mit Endgeräten anderer Hersteller kann dieses Datenobjekt nicht genutzt werden. Ein Hersteller von Mobilfunkendgeräten bietet Spiele oder Programme (Anwendungen) an, die der Nutzer nach dem Kauf des Endgerätes auf diesem speichern kann, und die nur auf den Endgeräten dieses Herstellers gespielt bzw. genutzt werden können. Um zu gewährleisten, dass die Datenobjekte nur mit Endgeräten von den Herstellern verwendet werden, die in dem Rechteobjekt RO beschrieben sind, muss im Endgerät eine Identifikation des Herstellers enthalten sein. Mobilfunkendgeräte enthalten die sogenannte *International Mobile Equipment Identifier* (IMEI). Erfindungsgemäß kann aus dieser Nummer der Endgerätehersteller ermittelt werden. Jeder Endgerätehersteller verwendet für seine Geräte eine IMEI aus einem Nummernbereich, der ihm zugewiesen wurde. Liegt die IMEI innerhalb dieses Nummernbereichs, so ist das Endgerät von diesem Hersteller. Bei Endgeräten, die keine IMEI besitzen, muss erfindungsgemäß eine eindeutige Herstelleridentifikation in einem nicht-flüchtigen und nicht manipulierbaren Speicher abgelegt sein.
3. Beschränkung der Nutzung von Medienobjekten auf Nutzer eines bestimmten Alters: Dadurch kann die Nutzung von Datenobjekten so beschränkt werden, dass der Nutzer zur Nutzung des Datenobjektes ein bestimmtes Alter haben muss. Andernfalls kann das Datenobjekt nicht genutzt werden. Auch die Beschränkung auf ein Mindestalter und ein maximales Alter sowie auf einen Altersbereich ist möglich. Die betroffenen Datenobjekte müssen dazu erfindungsgemäß eine entsprechende Angabe des geforderten Nutzeralters im Rechteobjekt RO enthalten. Dadurch kann man Datenobjekte beispielsweise derart schützen, dass nur junge Nutzer (Kinder) den Inhalt nutzen können. In dem Fall wird ein maximales Alter im Rechteobjekt angegeben. Das macht diese Datenobjekte für Kinder interessanter, da zum Beispiel die Eltern oder die älteren Geschwister sie nicht benutzen können, und es deshalb für die jungen Kinder etwas ganz Besonderes ist. Ein weiteres Anwendungsbeispiel ist das Versenden eines Datenobjektes als Geschenk, das zum Beispiel erst am Geburtstag nutzbar sein soll. Erfindungsgemäß muss zum Nutzen des so geschützten Datenobjektes das Geburtsdatum des Nutzers im nutzenden Gerät bekannt sein. Eine Möglichkeit besteht darin, das Geburtsdatum des Nutzers auf einer I-dentifikationskarte des Nutzers zu speichern, so dass es von dem nutzenden Endgerät gelesen werden kann. Bei GSM-Mobilfunkendgeräten wäre dafür das *Subscriber Identity Module* (SIM) geeignet. UMTS-Endgeräte besitzen stattdessen das sogenannte *Universal Subscriber Identity Module* (USIM). Das Speichern des Geburtsdatums des Nutzers auf einer der genannten Identifikationskarten ist besonders vorteilhaft, da zum Erwerb einer (U)SIM-Karte auch bisher das Geburtsdatum des Käufers angegeben werden muss. Falls der Käufer nicht der hauptsächliche Nutzer ist, ist dafür zu sorgen, dass auf der SIM-Karte das Geburtsdatum des hauptsächlichen Nutzers gespeichert wird.

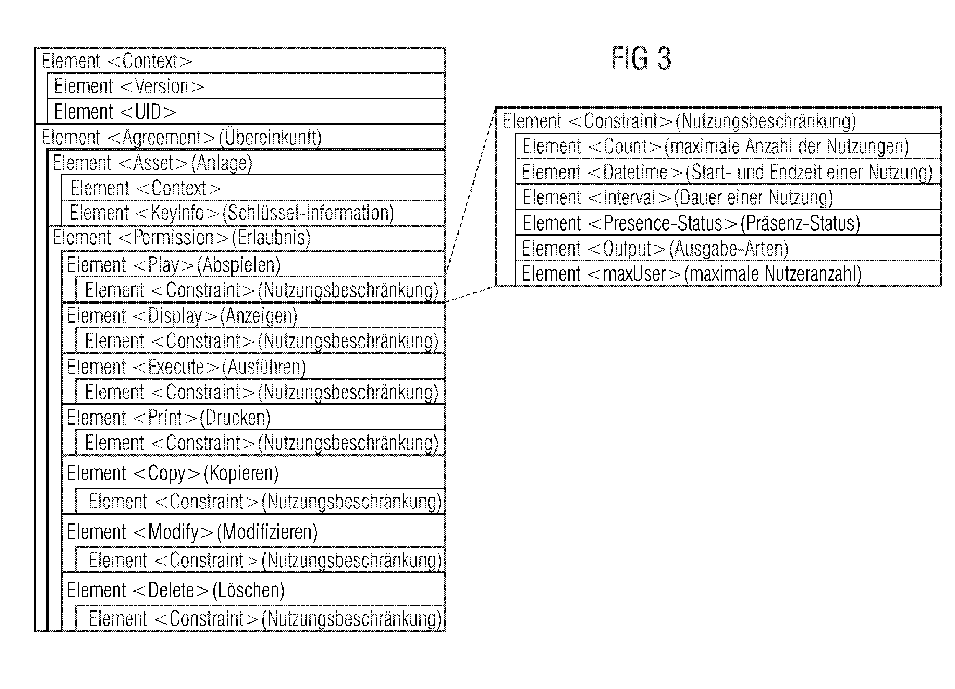

Figur 3 zeigt den Aufbau eines Rechteobjekts RO mit dem Element <Constraint>, wie schon in Figur 2 definiert und den zweiten Teil möglicher Nutzungsbeschränkungen. Die erfindungsgemäß neuen Nutzungseinschränkungen werden vorteilhaft als zusätzliche *Constraints* im Rechteobjekt RO eingeführt. Die folgenden *Constraints* werden neu eingeführt:
- Presence-Status (Präsenz-Status): die Nutzung eines Datenobjektes DO wird nur zum Beispiel im Präsenz-Status "in der Arbeit" erlaubt. Durch den Vergleich dieser Angabe im Rechteobjekt vom Präsenz-Server mit dem tatsächlichen Präsenz-Status des Nutzers bzw. weitere Nutzer, zum Beispiel alle Freunde des Nutzers, erfolgt eine Vergabe oder Verweigerung des Nutzungsrechts. Ein Beispiel könnte dafür sein, dass ein Mitarbeiter einer Firma eine firmeneigene Applikation mit Datenobjekten DO nur im Zusammenhang mit seiner Arbeit nutzen können soll. Zur Applikation gehört dann auch ein Rechteobjekt, das dem Mitarbeiter das Ausführen der Applikation (Permission *execute*) nur dann erlaubt, wenn sein entsprechender Presence-Status "am Arbeiten" lautet. Das Rechteobjekt führt dazu innerhalb des Elements *"Execute"* ein Constraint-Element *"Presence-Status",* in dem dann dieser Presence-Status "am Arbeiten" angegeben ist. Sobald der Mitarbeiter die Applikation starten will, wird auf Grund des Rechteobjekts beim entsprechenden Presence-Server (Präsenz-Server) der Presence-Status des Mitarbeiters abgefragt. Nur wenn der Status "am Arbeiten" zurückgeliefert wird, kann die Applikation gestartet werden. Ist dies nicht der Fall, dann kann die Applikation nicht gestartet werden. Wenn sich der Status des Mitarbeiters in einem weiteren Fall innerhalb eines beschränkten Zeitraumes (z.B. 5 Minuten) ändert, sollte der Presence-Server das Endgerät darüber informieren, damit dann (im Falle, dass nun der richtige Status eingestellt ist) die Applikation sofort starten kann. Alternativ könnte das Endgerät automatisch die Anfrage nach dem Presence-Status des Mitarbeiters immer wieder wiederholen. Ein weiteres Beispiel könnte sein, dass drei Freunde regelmäßig gemeinsam ein Online-Spiel XY (Internet- bzw. Netzwerkspiel) spielen. Um zu vermeiden, dass einer alleine oder zwei gemeinsam für das Spiel üben, bekommen sie jeweils ein Rechteobjekt für die Spiel-Applikation, das Ihnen das Ausführen der Applikation (Permission *execute*) nur dann erlaubt, wenn alle drei auf dem Spiele-Server eingeloggt sind. Das Rechteobjekt führt dazu innerhalb des Elements *"Execute"* ein Constraint-Element *"Presence-Status",* in dem zum Beispiel die Informationen Adresse des Spiele-Servers, Teilnehmer-ID (oder sonstige Nutzer-ID (Identifikationsnummer)) der drei Freunde und ein notwendiger Presence-Status (hier zum Beispiel: "auf dem Spiele-Server für das Spiel XY eingeloggt") enthalten sind. Sobald sich einer der drei Freunde zum Spiel anmeldet bzw. einloggt und die Spiele-Applikation starten will, wird auf Grund des Rechteobjekts beim entsprechenden Spiele-Server der Presence-Status der beiden anderen Freunde abgefragt. Nur wenn für die beiden anderen Freunde der Status "auf dem Spiele-Server für das Spiel XY eingeloggt" zurückgemeldet wird, kann die Spiele-Applikation gestartet werden. Ist dies nicht der Fall, dann kann die Spiele-Applikation nicht gestartet werden. Wenn sich der Status der Freunde (der angefragt wurde) innerhalb eines beschränkten Zeitraumes (zum Beispiel 5 Minuten) ändert, dann sollte der Spiele-Server das zuvor anfragende Endgerät darüber informieren, damit dann (im Falle, dass nun alle drei Freunde eingeloggt sind) die Spiele-Applikation sofort starten kann. Alternativ könnte das Endgerät automatisch die Anfrage nach dem Presence-Status der zwei Freunde immer wieder wiederholen.
- Output (Ausgabe-Arten (bzw. Ausgabe-Medium oder AusgabeKanal)) in einem Rechteobjekt: die Nutzung eines Datenobjektes DO wird nur auf vorher definierte Art und Weise (bzw. über dieses Medium oder diesen Kanal) erlaubt. Dies kann durch den Vergleich dieser Angabe mit der tat sächlichen Art und Weise (bzw. Medium und/oder Kanal) der Ausgabe im Endgerät geschehen. Eine Abfrage über die tatsächliche Art und Weise der Ausgabe im Endgerät (Ausgabe-Hardware) kann zum Beispiel über Hardware-Einstellung erfolgen. Darauf hin kann abhängig vom Vergleichsergebnis die Nutzung verweigert oder erlaubt werden. Ein Beispiel könnte sein, dass ein DJ (Plattenabspieler in Diskotheken) zu einem relativ günstigen Preis ein Rechteobjekt für ein neues Datenobjekt (Musikstück) DO erhält, das ihm das Abspielen des Objektes (Permission *play*) nur auf bestimmten Hardware-Ausgängen (z. B. Kopfhörer-Ausgang) erlaubt, die wiederum nur ein leises Abspielen der Musik ermöglichen. Das Rechteobjekt führt dazu innerhalb des Elements *"Play"* ein Constraint-Element *"Output",* in dem die erlaubten Hardware-Ausgänge enthalten sind. Nur auf diesen Ausgängen ist dann das Abspielen erlaubt. Möchte der DJ dann das Stück laut vor dem Publikum spielen, kauft er das Musikstück und erhält damit ein Rechteobjekt, das die Einschränkung der Nutzung nicht mehr enthält.
- maxUser (maximale Nutzeranzahl): Es wird die maximale Anzahl von (gleichzeitigen) Nutzern und/oder die Nutzungsgemeinschaft in einem Rechteobjekt definiert, auf die sich diese maximale Anzahl bezieht. Dadurch wird die (gleichzeitige) Nutzung eines Datenobjektes DO auf diese maximale Anzahl innerhalb der Nutzungsgemeinschaft beschränkt. Der Nutzer meldet sich zu Beginn der Nutzung auf einem Nutzungs-Server an. Dabei erfolgt eine periodische Erneuerung der Anmeldung und eine Kontrolle über die Anzahl der (gleichzeitigen) Nutzer auf dem Nutzungs-Server. Die Vergabe oder Verweigerung des Nutzungsrechts durch den Nutzungs-Server erfolgt schließlich in Abhän gigkeit von der momentanen Anzahl der (gleichzeitigen) Nutzer. Ein Beispiel dafür könnte sein, dass für die Mitarbeiter einer Firma nach dem Geschäftsmodell "Arbeitsplatz-Lizenzen" eine Applikation mit Datenobjekten zur Verfügung gestellt werden soll. Zu dieser Applikation hat dann jeder Mitarbeiter auf seinem Endgerät ein Rechteobjekt, das dem Mitarbeiter das Ausführen der Applikation (Permission *execute*) nur dann erlaubt, wenn eine maximale Anzahl von Mitarbeitern, die gerade diese Applikation nutzen, noch nicht erreicht ist. Selbstverständlich könnte es dabei auch einen Anzahl-Bereich geben. Ein Anzahl-Bereich ist ein Intervall (zum Beispiel 5 - 20 Endgeräte). Das Rechteobjekt führt dazu innerhalb des Elements *"Execute"* ein Constraint-Element *"maxUser",* in dem zum Beispiel die Adresse des (Nutzungsrechte) Servers, der die Kontrolle durchführt, die maximale Anzahl von Mitarbeitern, die gleichzeitig die Applikation nutzen dürfen und eine Liste aller Mitarbeiter der Firma angegeben ist. Sobald einer der Mitarbeiter die Applikation starten will, wird auf Grund des Rechteobjekts beim entsprechenden Server angefragt, ob aus der Liste der Mitarbeiter die maximale Anzahl der momentanen Nutzer schon erreicht ist. Ist dies nicht der Fall, dann kann die Applikation gestartet werden und der zusätzliche Nutzer ist damit beim Server als momentaner Nutzer dieser Applikation registriert. Ist die maximale Anzahl von gleichzeitigen Nutzern hingegen schon erreicht, kann die Applikation nicht gestartet werden. In einem weiteren Fall kann es sinnvoll sein, dass der Server innerhalb eines beschränkten Zeitraumes (zum Beispiel 5 Minuten) das Endgerät informiert, falls einer der Nutzer die Applikation beendet, so dass dann das Endgerät die Applikation sofort starten kann. Alternativ könnte das Endgerät automatisch die Anfrage immer wieder wiederholen.

Neben den schon erwähnten Genehmigungen von Rechten (Permissions) "Abspielen", "Anzeigen", "Ausführen" und "Drucken" können weitere erfindungsgemäße Genehmigungen von Rechten in einem Rechteobjekt RO eingeführt werden. Solche Genehmigungen können sein:
- "Kopieren": damit kann dem Nutzer eines Endgerätes das Recht gegeben werden, ein Datenobjekt DO bis zu einer begrenzten Anzahl als Datei zu kopieren. Der Nutzer hat dadurch die Möglichkeit, Sicherheitskopien zu machen und/oder auch das Medienobjekt an mehreren Endgeräten zu nutzen (zum Beispiel am Computer (Rechner), im Auto, im Mobilfunkendgerät etc.).
- "Modifizieren": damit hat der Nutzer das Recht, das Datenobjekt DO in irgendeiner Weise zu modifizieren bzw. zu bearbeiten. Gefällt dem Nutzer zum Beispiel ein bestimmtes Detail in einem Bild nicht, dann benötigt er das Recht zur Modifikation des Bildes, damit er das Bild nach seinen Wünschen bearbeiten kann.
- "Löschen": damit hat der Nutzer das Recht, das Datenobjekt DO zu löschen, wie zum Beispiel ein Werbe-Jingle (zum Beispiel eine Bild-, Ton-, Videodatei etc.), der jedes Mal beim Einschalten eines Mobilfunkendgerätes des Nutzers (oder bei sonstigen Aktivitäten) abgespielt wird. Erfindungsgemäß kann sich der Nutzer das Recht erwerben, zum Beispiel durch Kauf des Rechtes, dass ein solcher Jingle nicht mehr abgespielt wird, indem er das entsprechende Medienobjekt löschen kann.

Zu jeder dieser Genehmigungen (*Permissions)* können dann wieder Nutzungsbeschränkungen, sogenannte *Constraints,* im Rechteobjekt RO enthalten sein. Mehrere Genehmigungen können für ein Datenobjekt DO vorhanden sein. So ist es zum Beispiel vorstellbar, dass bei einer Videodatei das Abspielen, Löschen und Kopieren erlaubt ist, jedoch nicht das Modifizieren etc.

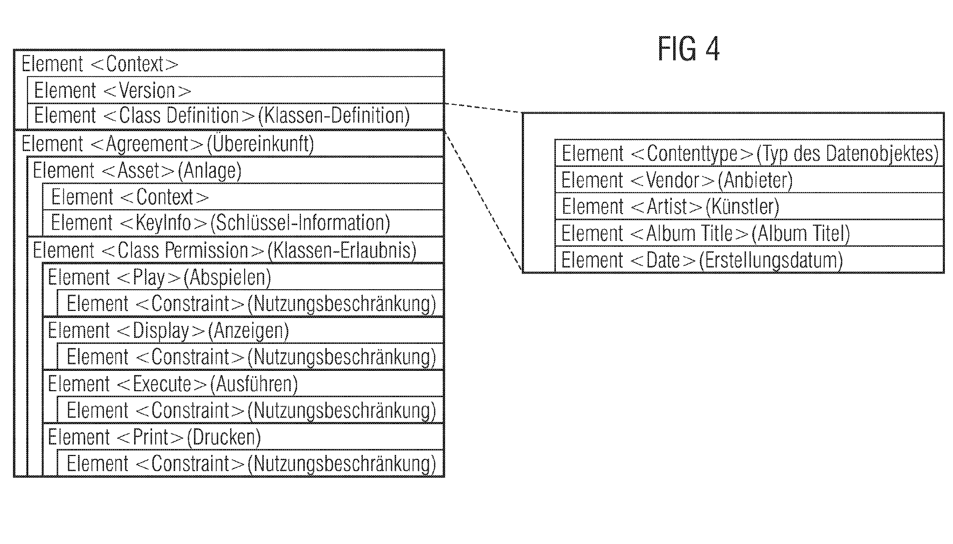

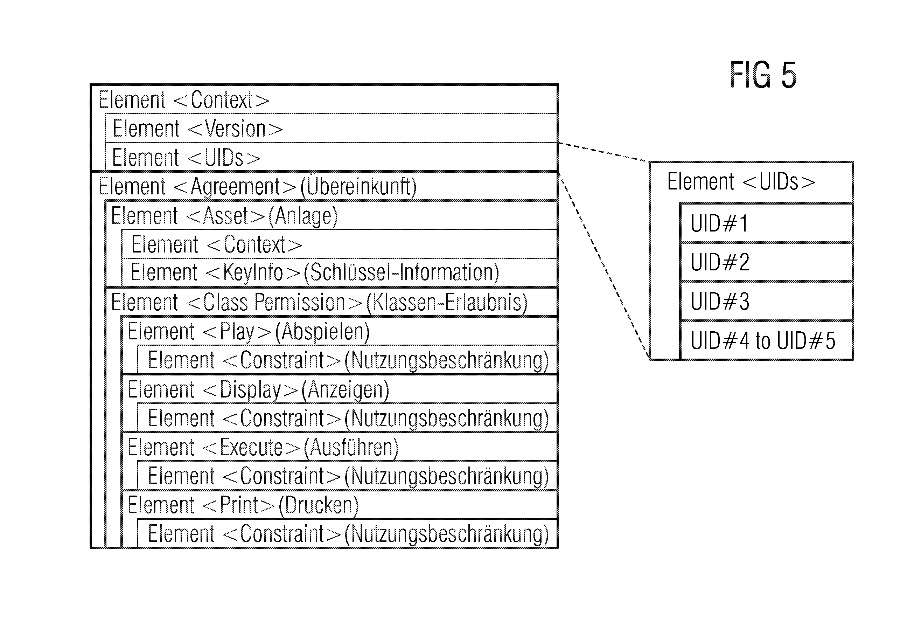

Figur 4 und 5 zeigen ein erfindungsgemäßes Rechteobjekt RO, das die Nutzung einer Klasse von Medienobjekten erlaubt (Klassennutzungsrecht). Dabei können verschiedene Arten der Nutzung bzw. Nutzungsbeschränkungen definiert werden. Das Element <UID> wird in diesem Rechteobjekt RO nicht benötigt, da es *ein* Datenobjekt referenziert. Statt dessen wurde das erfindungsgemäße Element <Class Definition> eingeführt, das die Klasse der Datenobjekte beschreibt, deren Nutzung durch dieses Rechteobjekt RO erlaubt werden soll. Beispielweise sind die folgenden Datenobjekt-Eigenschaften aufgeführt:
- Content Beschreibt den Typ des Datenobjektes und type bei Bedarf auch einen Untertypen, z.B. Musik/Pop oder Spiel/Strategie
- Vendor Anbieter des Datenobjekts, z.B. der Musikverlag bei einem Musikstück
- Artist Der Künstler, falls es sich um ein Musikstück handelt
- Album Tit- Der Titel des Albums, von dem das Musikle stück stammt
- Date Das Datum, an dem das Datenobjekt erstellt wurde

Die einzelnen Eigenschaften sind logisch UND-verknüpft. Das bedeutet, dass alle Eigenschaften von einem Datenobjekt gleichzeitig erfüllt sein müssen, damit dieses zu der defi nierten Klasse gehört. Das Element <Permission> wurde durch das erfindungsgemäße Element <Class Permission> ersetzt. Die dort beschriebenen Genehmigungen beziehen sich auf alle Datenobjekte, die die im Element <Class Definition> beschriebenen Eigenschaften erfüllen. Dadurch wird es möglich, mit nur einem Rechteobjekt RO die Nutzung von mehreren unterschiedlichen Datenobjekten zu erlauben. Die Datenobjekte müssen dazu mindestens eine Gemeinsamkeit haben, damit die Nutzung durch dieses eine Rechteobjekt RO erlaubt wird. Unter Gemeinsamkeit wird verstanden, dass beispielsweise eine der folgenden Eigenschaften der Medienobjekte gleich ist.
- Interpret
- Albumtitel
- Anbieter des Medienobjekts
- Kategorie des Medienobjekts (z.B. Musik, Spiel, Anwendung, ...)
- Unterkategorie des Medienobjekts (z.B. für Musik: Pop, Rock, Klassik, ... )

Das Recht, mehrere Datenobjekte nutzen zu dürfen, wird als *Klassen-Nutzungsrecht* bezeichnet. Ein Nutzer möchte die Rechte zum Hören aller Lieder seines Lieblings-Interpreten besitzen. Er muss dazu lediglich *ein* Rechteobjekt RO erwerben. Er kann mit diesem Rechteobjekt RO auch alle zukünftigen Lieder dieses Interpreten anhören. Neben der Kategorie *Interpret,* zu der das Rechteobjekt RO erfindungsgemäß die Nutzung erlaubt, können auch anhand von weiteren Eigenschaften, wie oben genannt, die Datenobjekte kategorisiert werden, so dass ein *Klassen-Nutzungsrecht* für diese weiteren Eigenschaften vergeben werden kann. Ein Rechteobjekt RO, das ein Klassen-Nutzungsrecht vergeben kann, enthält erfindungsgemäß eine Definition der Eigenschaften, zum Beispiel den Interpreten eines Liedes, die ein Datenobjekte erfüllen muss, damit eine Nutzung durch dieses Rechteobjekt RO erlaubt ist. Erfindungsgemäß ist es dazu notwendig, dass von dem Datenobjekt die benötigte Eigenschaft bekannt ist, damit ein Klassen-Nutzungsrecht erteilt werden kann. Wurde das Datenobjekt mit der bei der OMA standardisierten Methode *Content Download* beschafft, so wird eine Beschreibung des Datenobjekts mitgeliefert, die u.a. den Inhaltstyp, eine Inhaltsbeschreibung und den Anbieter angibt. Weiterhin besteht die Möglichkeit, die Eigenschaften des Datenobjekts in dem DRM-Container zu beschreiben. Wichtig ist in jedem der Fälle, die Beschreibung der Objekteigenschaften vor unbefugter Änderung zu schützen, denn durch nachträgliches Einfügen einer nicht vorhandenen Eigenschaft in die Beschreibung, kann dieses Datenobjekt mit einem Rechteobjekt RO genutzt werden, das ursprünglich die Nutzung nicht erlaubt hat. Geschützt werden können die Beschreibungen der Eigenschaften durch Berechnung eines sogenannten Hash-Wertes, der zusätzlich verschlüsselt werden muss. Dadurch werden Änderungen der Beschreibung erkannt, so dass in diesem Fall das zugehörige Datenobjekt zur Nutzung gesperrt werden kann. Eine weitere Methode, mit einem Rechteobjekt RO die Nutzung von mehreren Datenobjekten zu erlauben besteht darin, die Identifikation der Datenobjekte (Content-ID) im Rechteobjekt RO entsprechend zu definieren. Diese wird im Element <UIDs> (siehe Figur 4) im Rechteobjekt RO angegeben. Erfindungsgemäß können in diesem Element mehrere Content-IDs angegeben werden, oder ein Wertebereich für die Content-IDs, mit dem Ziel, dass Datenobjekte mit einer der aufgelisteten Content-IDs oder einer Content-ID innerhalb des angegebenen Wertebereichs genutzt werden dürfen. Bei dieser Methode ist es erforderlich, dass alle betroffenen Datenobjekte mit dem gleichen Schlüssel zu entschlüsseln sind. Bei Rechteobjekten RO, die eine Nutzung von mehreren Datenobjekten regeln ist besonderer Wert darauf zu legen, dass diese Rechteobjekte RO nicht unbeabsichtigt gelöscht werden können. Ein weiteres erfindungsgemäßes Rechteobjekt, das die Nutzung einer Klasse von Datenobjekten erlaubt (Klassennutzungsrecht), ist in Figur 4 dargestellt. In diesem Beisiel wurde das Element <UID> durch das erfindungsgemäße Element <UIDs> ersetzt, das mehrere Identifikationen von Medienobjekten (Content-IDs) enthalten kann. Diese können entweder explizit aufgelistet werden, oder es kann ein Wertebereich angegeben werden, im Beispiel "UID#4 to UID#5". Alle Medienobjekte, deren Content-Ids explizit aufgelistet sind, oder die im angegebenen Wertebereich liegen, dürfen mit diesem Rechteobjekt RO verwendet werden. Ein Endgerät, das ein Rechteobjekt RO für eine Klasse von Datenobjekten in seinem Speicher erkennt, zum Beispiel anhand des Elements <Class Definition> oder <Class Permission>, sorgt dafür, dass dieses Element nicht unbeabsichtigt gelöscht werden kann.

Figur 6 zeigt eine Netzeinheit NE mit einer Empfangseinheit E zum Empfangen einer Nutzungsanfrage für die Benutzung eines Datenobjektes DO, einer Verarbeitungseinheit V zum Überprüfen eines mindestens eine Nutzungsbeschränkung enthaltenden Rechteobjekts RO eines Datenobjekts DO und zum Erstellen eines Überprüfungsergebnisses und mit einer Sendeeinheit S zum Senden einer Freigabe bei einem positiven Überprüfungsergebnis für die Nutzung einer Klasse von Datenobjekten DO durch das Endgerät.

## Patentansprüche

1. Verfahren zur Nutzungsbeschränkung einer Klasse von Datenobjekten (DO) für ein Endgerät in einem Kommunikationsnetz,
**dadurch gekennzeichnet,**
**dass** bei einer Nutzungsanfrage eines Endgerätes für die Benutzung eines ein Rechteobjekt (RO) enthaltenden Datenobjektes das Rechteobjekt von einer Netzeinheit überprüft wird, und
**dass** im Falle eines positiven Überprüfungsergebnisses eine Klasse von Datenobjekten (DO) von der Netzeinheit (NE) zur Nutzung für das Endgerät freigegeben wird.

2. Verfahren nach Anspruch 1,
**dadurch gekennzeichnet,**
**dass** das Rechteobjekt (RO) mindestens eine Nutzungsbeschränkung und/oder Gemeinsamkeit von Datenobjekten (DO) enthält.

3. Verfahren nach einem der vorhergehenden Ansprüche,
**dadurch gekennzeichnet,**
**dass** zur Nutzung eines Datenobjektes (DO) mindestens eine Genehmigung in einem Rechteobjekt (RO) enthalten ist.

4. Verfahren nach einem der vorhergehenden Ansprüche,
**dadurch gekennzeichnet,**
**dass** die Nutzung eines Datenobjektes (DO) auf ein geografisches Gebiet beschränkt ist.

5. Verfahren nach Anspruch 4,
**dadurch gekennzeichnet,**
**dass** zur Nutzung eines auf ein geographisches Gebiet beschränkten Datenobjektes (DO) die geographische Position des nutzenden Endgerätes bestimmt wird.

6. Verfahren nach einem der vorhergehenden Ansprüche,
**dadurch gekennzeichnet,**
**dass** die Nutzung eines Datenobjektes (DO) auf Endgeräte bestimmter Hersteller beschränkt ist.

7. Verfahren nach einem der vorhergehenden Ansprüche,
**dadurch gekennzeichnet,**
**dass** die Nutzung eines Datenobjektes (DO) auf einen bestimmten Altersbereich beschränkt ist.

8. Verfahren nach einem der vorhergehenden Ansprüche,
**dadurch gekennzeichnet,**
**dass** das Recht für die Nutzung eines Datenobjektes (DO) abhängig mindestens eines Präsenz-Status eines Nutzers eines Endgerätes und/oder mindestens eines Präsenz-Status eines weiteren Nutzers eines Endgerätes ist.

9. Verfahren nach einem der vorhergehenden Ansprüche,
**dadurch gekennzeichnet,**
**dass** das Recht für die Nutzung eines Datenobjektes (DO) beschränkt ist auf mindestens eine Art der Ausgabeform und/oder mindestens eine Art der Ausgabe-Hardware des Datenobjektes (DO) .

10. Verfahren nach einem der vorhergehenden Ansprüche,
**dadurch gekennzeichnet,**
**dass** die Genehmigung zum Kopieren des Datenobjektes (DO) in einem Rechteobjekt (RO) vergeben wird.

11. Verfahren nach einem der vorhergehenden Ansprüche,
**dadurch gekennzeichnet,**
**dass** die Genehmigung zum Modifizieren des Datenobjektes (DO) in einem Rechteobjekt (RO) vergeben wird.

12. Verfahren nach einem der vorhergehenden Ansprüche,
**dadurch gekennzeichnet,**
**dass** die Genehmigung zum Löschen des Datenobjektes (DO) in einem Rechteobjekt (RO) vergeben wird.

13. Verfahren nach einem der vorhergehenden Ansprüche,
**dadurch gekennzeichnet,**
**dass** die gleichzeitige Nutzung eines Datenobjektes (DO) auf eine Mindest-Anzahl und/oder auf eine maximale Anzahl von Endgeräten beschränkt ist.

14. Verfahren nach einem der vorhergehenden Ansprüche,
**dadurch gekennzeichnet,**
**dass** die Nutzungsanfrage des Endgerätes eine Identifikation des Herstellers des Endgerätes, die geografische Position des Endgerätes und/oder das Alter des Nutzers des Endgerätes enthält.

15. Verfahren nach einem der vorhergehenden Ansprüche,
**dadurch gekennzeichnet,**
**dass** die Nutzung einer Klasse von Datenobjekten (DO) aufgrund mindestens einer Gemeinsamkeit der Datenobjekte (DO) in einem Rechteobjekt (RO) eines Datenobjektes (DO) von einer Netzeinheit (NE) freigegeben wird.

16. Verfahren nach Anspruch 15,
**dadurch gekennzeichnet,**
**dass** als Gemeinsamkeit der Interpret, der Albumtitel, der Anbieter des Datenobjekts (DO), die Kategorie des Datenobjekts (DO), die Unterkategorie und/oder Ähnliches verwendet wird.

17. Verfahren nach einem der vorhergehenden Ansprüche,
**dadurch gekennzeichnet,**
**dass** als Endgerät ein Mobilfunkendgerät, ein Computer, ein Handheld, ein Notebook und/oder Ähnliches verwendet wird.

18. Verfahren nach einem der vorhergehenden Ansprüche,
**dadurch gekennzeichnet,**
**dass** das Kommunikationsnetz ein zellulares Mobilfunknetz ist.

19. Verfahren nach einem der vorhergehenden Ansprüche,
**dadurch gekennzeichnet,**
**dass** Datenobjekte (DO) Audio-, Video-, Bild-, Spiele-, Anwendungs- und/oder ähnliche Dateien sind.

20. Verfahren nach einem der vorhergehenden Ansprüche,
**dadurch gekennzeichnet,**
**dass** als Netzeinheit (NE) ein Applikationsserver, ein Datenserver und/oder ein Endgerät verwendet wird.

21. Vorrichtung zur Nutzungsbeschränkung einer Klasse von Datenobjekten DO für ein Endgerät in einem Kommunikationsnetz,
- mit einer Empfangseinheit (E) in einer Netzeinheit (NE) zum Empfangen einer Nutzungsanfrage eines Endgerätes betreffend die Benutzung eines Datenobjektes (DO),
- mit einer Verarbeitungseinheit (V) in der Netzeinheit zum Überprüfen eines mindestens eine Nutzungsbeschränkung ent haltenden Rechteobjekts (RO) eines Datenobjekts (DO) und zum Erstellen eines Überprüfungsergebnisses,
- mit einer Sendeeinheit (S) in der Netzeinheit (NE) zum Senden einer Freigabe an das anfragende Endgerät bei einem positiven Überprüfungsergebnis für die Nutzung einer Klasse von Datenobjekten (DO) durch das Endgerät.

22. Vorrichtung nach Anspruch 21,
**dadurch gekennzeichnet,**
**dass** als Netzeinheit (NE) ein Applikationsserver, ein Datenserver und/oder ein Endgerät vorgesehen ist.

23. Vorrichtung nach einem der vorhergehenden Ansprüche,
**dadurch gekennzeichnet,**
**dass** als Kommunikationsnetz ein zellulares Mobilfunknetz vorgesehen ist.

24. Vorrichtung nach einem der vorhergehenden Ansprüche,
**dadurch gekennzeichnet,**
**dass** als Endgerät ein Mobilfunkendgerät, ein Computer, ein Handheld, ein Notebook und/oder Ähnliches vorgesehen ist.
